# EUROPEAN PATENT SPECIFICATION

(11) **EP 4 174 339 B1**
(45) Date of publication and mention of the grant of the patent: **28.08.2024**
(21) Application number: 21204888.8
(22) Date of filing: 27.10.2021
(51) Int. Cl.: F16D 65/00, F16D 65/092

(54) **DISC BRAKE, BRAKE PAD AND BRAKE SYSTEM COMPRISING THE DISC BRAKE AND BRAKE PADS**
SCHEIBENBREMSE, BREMSBELAG UND BREMSSYSTEM, DAS DIESE SCHEIBENBREMSE UND BREMSBELÄGE UMFASST
DISQUE DE FREIN, PLAQUETTE DE FREIN ET SYSTÈME DE FREIN COMPRENANT LE DISQUE DE FREIN ET DES PLAQUETTES DE FREIN

(43) Date of publication of application: 03.05.2023
(73) Proprietor: KNORR-BREMSE Systeme für Nutzfahrzeuge GmbH, 80809 München (DE)
(72) Inventor: Hollòsi, Máté, 1097 Budapest (HU); Kokrehel, Csaba, 1119 Budapest (HU); Blessing, Michael, 80687 Munich (DE); Peschel, Michael, 82296 Schöngeising (DE); Adamczyk, Philipp, 82347 Bernried (DE); Klingner, Matthias, 82276 Adelshofen (DE); Györke, Zsombor, 8360 Keszthely (HU); Toth, Janos, 6000 Kecskemét (HU); Heigl, Korbinian, 85652 Pliening (DE); Monori, Gyula, 6065 Lakitelek (HU); Kühnemuth, Gregor, 80339 Munich (DE); Nakamura, Tatsuro, 1027 Budapest (HU); Szabò, János, 1101 Budapest (HU); Schaller, Sebastian, 86462 Langweid (DE); Schöfberger, Tobias, 84048 Mainburg (DE); Krüger, Sven Philip, 81476 München (DE); Hös, Levente, 1047 Budapest (HU); Mlinarcsek, Csaba, 1167 Budapest (HU)

(56) References cited:
- EP-A1- 3 369 959
- EP-A1- 3 470 700
- WO-A1-2019/025723
- WO-A1-2020/038911
- FR-A1- 3 071 573
- JP-A- 2009 236 221
- JP-B2- 6 731 210
- US-A1- 2015 001 013

## Description

The invention relates to a disc brake, a brake pad, and a brake system comprising the disc brake and the brake pad, in particular, collaborating with a brake particles collection system.

Brake particles collection systems are known, e.g., from a publication made with Springer Verlag "At source brake dust collection system". According to this publication, suction grooves are machined at trailing edges of brake pads for collecting wear particles for giving the best results. At an "outlet flow", pipes connected to an electrical suction turbine and a filter are connected.

Furthermore, documents US 2021/123489 A1, US 2020/340541 A1, WO 2020/193776 A1 and WO 2020/193775 A1 describe different types of suction grooves.

To make an active local suction device for wear particles efficient, the particles have to be sucked off directly where they are generated, e.g., directly behind the brake pads or by means of grooves in the brake pads as mentioned before.

Document EP 3 470 700 A1 discloses a disc brake provided with a rotatable brake disc and a non-rotatable component comprising a brake caliper. The brake caliper comprises a brake wear removal equipment configured to collect brake wear particles and to be connectable to a collection device, wherein the brake wear removal equipment comprises at least one tube, a first end of which is configured to collect brake wear particles and a second end of which is connectable to the collection device.

In JP 2009236221 A, a brake pad for a disc brake is disclosed. The brake pad comprises a back plate and a brake lining, wherein the brake lining is attached to the back plate on an attachment face of the back plate. The back plate comprises at least one blind hole along the attachment face, and, further, the brake lining comprises several channels connecting the one blind hole and a friction surface of the brake lining.

However, due to the rotating disc and the limited installation space in commercial vehicles, it is difficult to collect the wear particles at both brake pads, namely, on both sides of the disc. Flexible hoses could be used for a particle transport since they are able to compensate a displacement of brake pads and of a brake caliper; however, again, only limited space is available and, furthermore, the temperature in the environment at the disc can be very high such that the use of flexible hoses is limited. As another option, suction channels inside the brake caliper or brake carrier would be possible; however, they are expensive and could clog over the brake lifetime. Furthermore, such channels would weaken the components of the brake or, when the weakening is compensated, would increase the weight and installation space demand of the components.

The object underlying the invention is to remedy the above disadvantages and to provide a brake system enabling a reliable removal of wear particles of brake pads while maintaining advantageous characteristics of the brake system.

The object is achieved by a disc brake according to claim 1, a brake pad according to claim 6 and brake systems according to claims 15 and 16.

According to the invention, a disc brake is provided with a rotatable brake disc and a non-rotatable component comprising a brake caliper. The brake caliper comprises a brake wear removal equipment configured to collect brake wear particles and to be connectable to a collection device.

Due to such a disc brake, no additional brackets for the brake wear removal equipment are necessary and the brake wear can be removed directly at the location where it is generated.

According to the invention, the brake wear removal equipment comprises at least one tube, a first end of which is configured to collect brake wear particles and a second end of which is connectable to the collection device.

By the provision of the tube as the brake wear removal equipment on the brake caliper, the brake wear particles can be remove in an easy and reliable manner. Further, the components can easily be designed such that they resist a high thermal load.

According to the invention, the brake caliper is configured to accommodate brake pads, and the brake caliper comprises an actuator configured to move the brake pads in a direction toward the brake disc for performing braking, and at least one caliper releasing mechanism configured to move the brake pads in a direction away from the brake disc for releasing the braking when the actuator is deactivated. The at least one caliper releasing mechanism comprises a pair of longitudinal spring elements, a first end of which is respectively joined to one of the brake pads and second ends of which are joined to one another and to the non-rotatable component such that the at least one caliper releasing mechanism is configured to be tensioned by a motion of the brake pads in the direction toward the brake disc. The longitudinal spring elements are respectively formed by a tube, and the first ends of the tubes are respectively configured to collect brake wear particles and the second ends are connectable to the collection device.

By such a disc brake, the brake wear particles can be removed without requiring additional installation space and without additional components compared to the conventional brake particle collection systems. Furthermore, the tubes being the spring elements for an active caliper release system can be easily exchanged when replacing the brake pads so that the clog over the lifetime of the brakes is avoided. Finally, also avoidance of drag torque is possible without using additional components.

In an advantageous implementation of the disc brake, the non-rotatable component comprises a brake carrier carrying the brake caliper, and the second ends of the tubes are joined to one another by means of a connecting part attached to the brake carrier.

Due to the use of the connecting part attached to the brake carrier for joining the second ends of the tubes, the tubes collecting the brake wear particles are able to reliably function as the caliper releasing mechanism.

In a further advantageous implementation of the disc brake, the second ends are connected to the collection device via a pipe connected to the second ends of the tubes.

By using the pipe, a material with higher thermal durability resisting high temperatures can be used so that, contrary to the use of a material, used, e.g., for hoses, which cannot resist higher temperatures, problems caused by the high temperatures during lifetime of the pipe can be avoided.

In a further advantageous implementation of the disc brake, the second ends are connected to the collection device via a flexible hose.

When using the flexible hose, compensation of the displacement of the caliper by each brake actuation and over the pad lifetime is possible. The flexible hose can be connected either to the second end of the tubes lead away from the region with the high temperatures or to the pipe.

Due to a further advantageous implementation of the disc brake, the brake caliper comprises two caliper releasing mechanisms having the tubes being the longitudinal spring elements.

When using the two caliper releasing mechanisms having the tubes, in case that the brake pads are accordingly prepared, removal of the brake wear particles at two places of the brake pads is possible which enhances the result of the removal.

According to a further aspect of the invention, a brake pad for a disc brake is provided. The brake pad comprises a back plate and a brake lining, wherein the brake lining is attached to the back plate on an attachment face of the back plate. The back plate comprises at least one blind hole along the attachment face, and the brake lining comprises several channels connecting one blind hole and a friction surface of the brake lining.

When connecting one blind hole and the friction surface of the brake lining by several channels, the places where the brake wear particles can removed can be distributed across the friction surface so that the effect of removing the brake wear particles is improved and a risk that the removal is deteriorated is reduced since, even when one of the channels is clogged, the remaining channels can further remove the particles.

In an advantageous implementation of the brake pad, the at least one blind hole is formed in a circumferential region of the back plate.

Arranging the blind hole in a circumferential region enables the orientation of the brake pad such that the blind hole, and, therefore, the channels connecting the blind hole and the friction surface of the brake lining can be located at the outgoing side of the brake. The outgoing side is this side where, when rotating in a direction of travel, the surface elements of the rotating disc brake leave the contact area of the disc brake and the brake pad. Therefore, the wear particles of the brake lining which are worn on the entire contact area during a braking action are moved to the outgoing side and, therefore, to the channels.

In an advantageous implementation of the brake pad, several blind holes are formed in opposite circumferential regions of the back plate.

By this implementation, as mentioned above, the wear particles currently worn from the brake lining can be removed and, also, wear particles which remained on the surface of the disc brake or which are generated when the brake disc rotates opposite to the direction of travel, can be removed.

In a further advantageous implementation of the brake pad, the channels are arranged such that orifices in the friction surface formed by the channels are aligned in at least one row.

When the orifices are aligned in one row, in particular, when the row corresponds to the direction of the blind hole, the channels can be designed short and the risk of clogging is reduced.

Due to a further advantageous implementation of a brake pad, the orifices are aligned in two rows, and the channels of one row are connected to one blind hole.

By this arrangement, the orifices can be arranged that, in a predefined area of the brake lining, the orifices can cover the entire predefined area of the brake lining in one direction since the can overlap. Therefore, all of the wear particles moving perpendicular to direction of the aligned orifices, can be removed.

According to the invention, at least some of the channels extend to an outside circumference of the brake lining such that the channels respectively form a slot in the brake lining.

Due to the fact that at least some of the channels extend to an outside circumference of the brake lining, when selecting an appropriate angle between the slot and the moving direction of the wear particles, the wear particles can be removed easily since through an orifice formed at an end face of the brake lining by the slots, air can be sucked into the slot and, therefore, into the channels and the blind hole for removing the wear particles.

Due to a further advantageous implementation of the brake pad, all of the channels extend to the outside circumference of the brake lining.

In this implementation, the effect of the preceding implementation can be improved.

In a further advantageous implementation of the brake pad, the slots do not intersect, in particular, the slots are parallel.

When the slots extending to the outside circumference of the brake lining do not intersect, so-called peninsulas between the slots are formed. These peninsulas are connected to regions of the brake lining in a motion direction of the brake disc before the channels. Therefore, a separated region which has been formed in the state-of-the-art between a slot and the outside circumference by providing the slot in the brake lining can be avoided'. This avoids the disadvantage of the risk that the brake lining could be damaged and the braking effect would be deteriorated as caused in the state of the art by a region separated from the remaining area of the brake lining.

In a further advantageous implementation of the brake pad, the blind hole has a central axis, and the channels extending to the outside circumference are arranged such that, in a view onto the friction surface, a projection of each point of the central axis onto the friction surface in a predefined area of the brake lining, which projection is virtually displaced perpendicularly with respect to the central axis towards the outside circumference intersects with at least one of the slots.

When the brake pad is oriented such that the blind hole and, therefore, its central axis are in an almost radial direction of the brake disk, since the central axis of the blind hole crosses the predefined area, the wear particles on the entire friction surface in the predefined area can be removed since the wear particles following the rotational motion of the disc brake fall into one of the channels extending to the outer circumference perpendicular with respect to the central axis.

In a further advantageous implementation of the brake pad, the brake lining has a shape like a segment of an annulus around a centre, and the channels are arranged such that, in a view onto the friction surface, in a predefined area of the brake lining, a projection onto the friction surface of each point of a line through the centre virtually rotated around the centre intersects with at least one of the channels.

Due to this implementation, wherein the shape is the shape of usually provided brake pads, namely, being a segment of an annulus around a centre, wherein the centre is the rotational axis of the brake disc, the wear particles following the rotational motion of the disc brake fall into one of the channels which intersect with each point of a line through the centre virtually rotated about the centre.

According to a further aspect of the invention, a brake system comprises a disc brake connected to a collection device for wear particles, wherein the first ends of the tubes are respectively configured to collect brake wear particles and the second ends are connected to a collection device, and brake pads.

By such a brake system, the wear particles can be removed without requiring additional installation space and without additional components compared to the conventional brake particle collection systems. Furthermore, the components can easily be designed such that they resist a high thermal load. Moreover, the tubes being the spring elements for the active caliper release system can be easily exchanged when replacing the brake pads so that the clog over the lifetime of the brakes is avoided. Finally, also avoidance of drag torque is possible without using additional components.

According to a further aspect of the invention, a brake system comprises a disc brake connected to a collection device for brake wear particles and brake pads comprising several channels connecting one blind hole in a back plate of the brake pad and a friction surface of the brake lining.

By providing the disc brake connected to the collection device, when connecting the blind hole and the friction surface of the brake lining by several channels, the places where the brake wear particles can removed can be distributed across the friction surface so that the effect of removing the brake wear particles is improved and a risk that the removal is deteriorated is reduced since, even when one of the channels is clogged, the remaining channels can further remove the particles.

According to an advantageous implementation of the brake system, the disc brake comprises a disc brake having the caliper releasing mechanism, as longitudinal spring elements, including tubes, the first ends of which are respectively configured to collect brake wear particles and the second ends are connected to the collection device.

By such a brake system, the wear particles can be removed without requiring additional installation space and without additional components compared to the conventional brake particle collection systems. Furthermore, the components can easily be designed such that they resist a high thermal load. Moreover, the tubes being the spring elements for the active caliper release system can be easily exchanged when replacing the brake pads so that the clog over the lifetime of the brakes is avoided. Finally, also avoidance of drag torque is possible without using additional components.

In an advantageous implementation of the brake system, the first end of the tubes are connected to the blind hole.

This implementation provides the most advantages effect of removing the wear particles.

In a further advantageous implementation of the brake system, the disc brake is configured such that an open end of the blind hole is arranged at an end face of the back plate directed away from a turning centre of the rotatable brake disc.

When the open end of the blind hole is directed away from the turning center of the rotatable brake disc, this arrangement enables short lines for removing the wear particles and enables an advantageous service since the lines are easily assessable.

In yet a further advantageous implementation of the brake system, the disc brake is configured such that the central axis of the blind hole of the brake pads leads beyond a turning centre of the rotatable brake disc such that a direction of a virtual displacement of the projection of each point of the central axis differs from a tangential direction of the brake disc.

By this arrangement, the function of the removal of the wear particles is insured when the channels extending to the outside circumference are arranged such that, in the view onto the friction surface, the projection of each point of the central axis onto the friction surface in a predefined area of the brake lining, which projection is virtually displaced perpendicularly with respect to the central axis towards the outside circumference along the slots intersects with at least one of the slots.

Below, the invention is elucidated by means of embodiments referring to the attached drawings.

In particular,
- Fig. 1: shows a partial illustration of a brake system comprising a disc brake and brake pads;
- Fig. 1a: shows an enlarged region of the brake system of Fig. 1;
- Fig. 2: shows a partial illustration of a brake pad according to a first embodiment in a first viewing direction;
- Fig. 3: shows a partial illustration of the brake pad according to the first embodiment in a second viewing direction;
- Fig. 4: shows a partial illustration of the brake pad according to the first embodiment in a third viewing direction and paths of break wear particles;
- Fig. 5: shows a partial illustration of the brake pad according to a second embodiment and paths of break wear particles;
- Fig. 6: shows a partial illustration of a brake pad according to a third embodiment;
- Fig. 7: shows a partial illustration of a brake pad according to a fourth embodiment; and
- Fig. 8: shows a partial illustration of a brake pad according to a fifth embodiment.

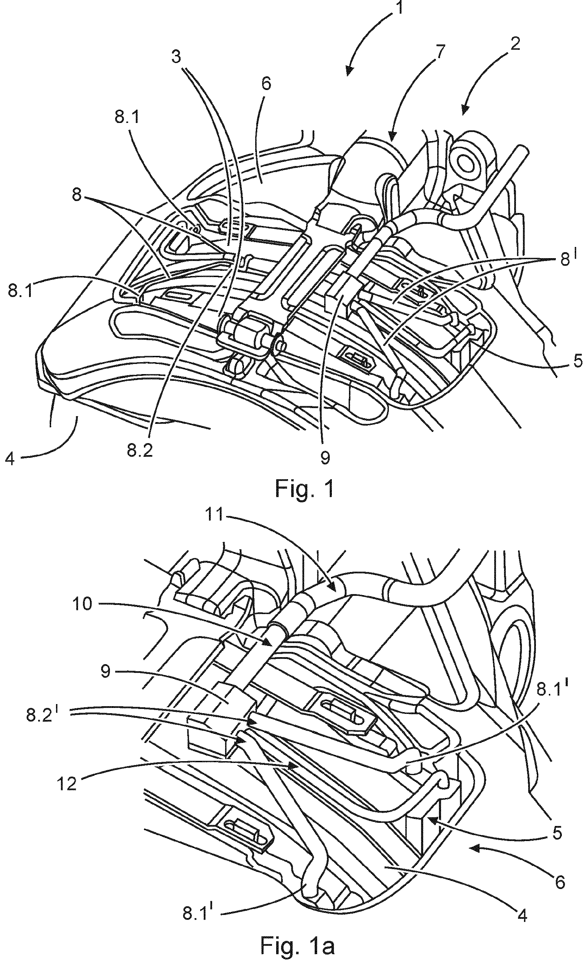

**Fig. 1** shows a partial illustration of a brake system 1 comprising a disc brake 2 and brake pads 3 and **Fig. 1a** illustrates an enlarged region of the brake system 1 of Fig. 1. The disc brake 2 is connected to a collection device, in particular, a suction device, (not shown) for brake wear particles. The disc brake 2 further comprises a brake disc 4 and a non-rotatable component.

The non-rotatable component comprises a brake carrier 5 and a brake caliper 6 configured to accommodate the brake pads 3. The brake carrier 5 carries the brake caliper 6, in particular, a guiding wire 12 is mounted on the brake carrier 5 and guides a connecting part 9. In an alternative embodiment, no separate brake carrier 5 is provided but the brake caliper 6 is directly attached to an axle of a vehicle.

The brake caliper 6 comprises an actuator 7 configured to move the brake pads 3 in a direction toward the brake disc 4 for performing braking and a caliper releasing mechanism which is configured to move the brake pads 3 in a direction away from the brake disc 4 for automatically releasing the brake when the actuator 7 is deactivated.

The caliper releasing mechanism comprises a pair of longitudinal spring elements 8, 8', the first end 8.1, 8'.1 of which is respectively joined to one of the brake pads 3 and second ends 8.2, 8'.2 of which are joined to one another by means of the connecting part 9 attached to the brake carrier 5 such that the caliper releasing mechanism is configured to be tensioned by a motion of the brake pads 3 in direction toward the brake disc 4. Therefore, the longitudinal spring elements 8, 8' are pretensioned and spread the brake pads 3 in order to avoid drag torque at the brake. In alternative embodiments, the spring elements 8, 8' are not pretensioned and/or the second ends 8.2, 8'.2 are not joined to one another by means of the connecting part 9 but they are directly joined to one another and to the non-rotatable component. The longitudinal spring elements 8' on the right side of Fig. 1 and in Fig. 1a are respectively formed by a tube and the first ends 8'.1 of the tubes are respectively configured to collect brake wear particles and the second ends 8'.2 are connected to the collection device (not shown) such that the tubes are components of a brake wear removal equipment configured to collect brake wear particles and to be connectable to the collection device. In alternative embodiments, the tubes do not form the longitudinal spring elements 8' but are provided additionally to the longitudinal spring elements 8'. In a further additional embodiment, the brake caliper 6 is provided with another component collecting bake wear particles and being connectable to a collection device, e.g. a channel made from a bent sheet metal.

As shown in Fig. 1, one of the caliper releasing devices on an outgoing side of the disc brake 2 has tubes being the longitudinal spring elements 8' and the other caliper releasing device has longitudinal spring elements 8 formed of wires. The outgoing side is this side where, when rotating in a direction of travel, the surface elements of the rotating disc brake leave the contact area of the disc brake and the brake pad. In alternative embodiments, both caliper releasing devices are provided with tubes being the longitudinal spring elements 8'.

As to be seen in Fig. 1a, the second ends 8'.2 are connected to the collection device via a pipe 10 connected to the second ends 8'.2 of the tubes via the connecting part 9 and via a flexible hose 11 joined to the pipe 10. The pipe 10 is designed to sustain high temperatures in this area and to avoid getting in contact with a turning rim of the brake disc 4. The hose 11 is designed flexible to compensate the axial displacement of the brake caliper 6 due to brake pad/brake disc wear and displacement while breaking. In alternative embodiments, the pipe 10 and/or the hose 11 can be omitted if the component attached to the second ends 8'.2 is heat-resistant enough and has an appropriate flexibility.

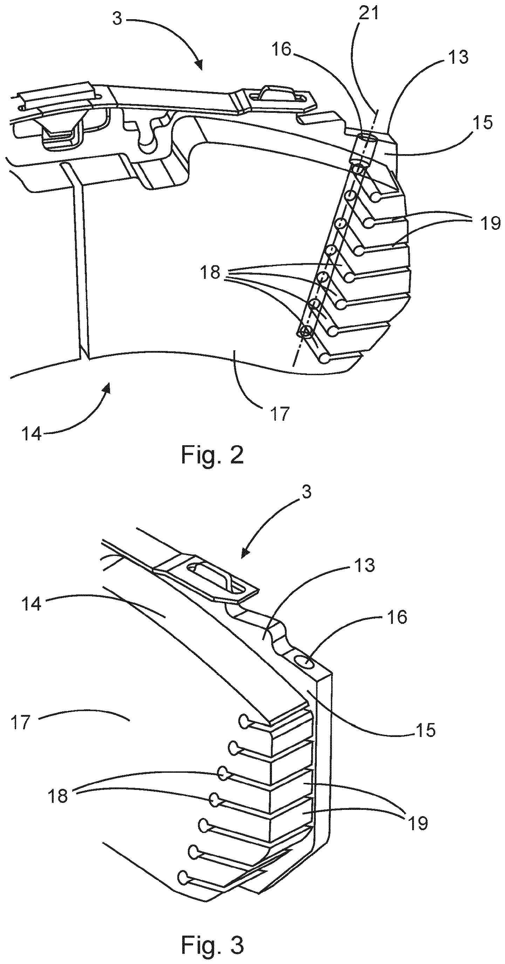

**Fig. 2** shows a partial illustration of a brake pad 3 according to a first embodiment in a first viewing direction and **Fig. 3** shows a partial illustration of the brake pad 3 according to the first embodiment in a second viewing direction.

The brake pad 3 comprises a back plate 13 and a brake lining 14. The brake lining 14 is attached to the back plate 13 on an attachment face 15 of the back plate 13. The back plate 13 further comprises a blind hole 16 along the attachment face 15, i.e., parallel with respect to the attachment face 15. In this embodiment, the blind hole 16 is formed as a bore. In alternative embodiments, the blind hole 16 can also be formed as, e.g., a through hole with a plug, a recess in the attachment face 15 or as a recess or a bore which is not exactly parallel to the attachment face 15.

In the shown embodiment, the brake lining 14 has the shape like a segment of an annulus around a center. The center corresponds to a turning center of the rotatable brake disc 4. In alternative embodiments, the brake lining 14 has another shape, e.g., a circular shape.

The blind hole 16 is formed in a circumferential region of the back plate 13. This means that the blind hole 16 is formed close to an outside circumference of the back plate 13. In the present embodiment, the blind hole 16 is close to an end of the back plate 13 in the circumferential direction. In particular, the blind hole 16 is close to the end at the outgoing side of the brake pad 3. In alternative embodiments, several blind holds 16 are provided, in particular, on the outgoing side and on the ingoing side of the brake pad 3, i.e., in opposite circumferential regions of the back plate 13.

The brake lining 14 comprises several channels 18 connecting the one blind hole 16 and a friction surface 17 of the brake lining 14. All of the channels 18 extend to the outside circumference of the brake lining 14 such that the channels 14 respectively form a slot 19 in the brake lining 14. For the sake of clarity, in this figure and in the subsequent figures, not all of the channels 18 and of the slots 19 are designated by a reference sign. In alternative embodiments, not all of the channels 14 but merely one or some of the channels 14 extend to the outside circumference of the brake lining 14 and respectively form one of the slots 19.

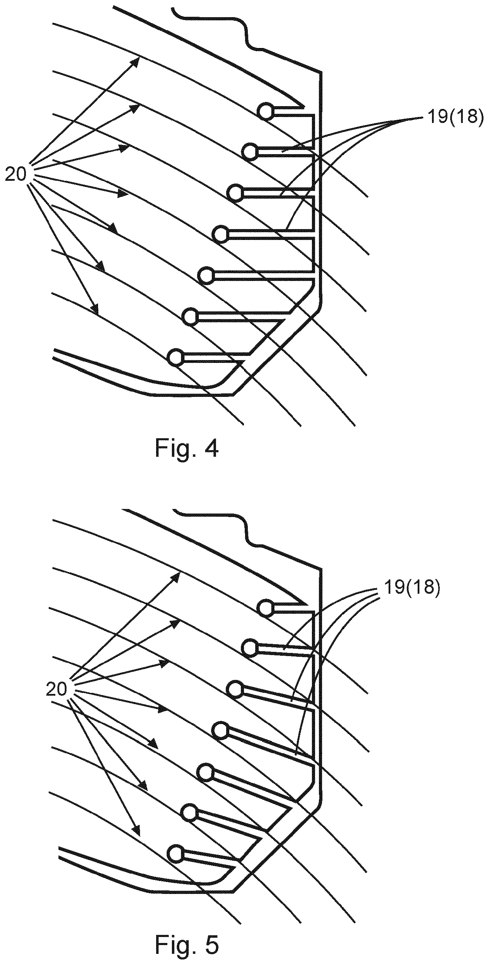

The blind hole 16 has a central axis 21. The channels 18 extending to the outer circumference of the brake lining 14 are arranged such that, in a view onto the friction surface 17, a projection of each point of the central axis 21 onto the friction surface in a predefined area of the brake lining 14, which projection is virtually displaced perpendicularly with respect to the central axis 21 towards the outside circumference intersects with at least one of the slots 19. Therefore, when the brake pad 3 is oriented such that the central axis 21 of the blind hole 16 is in an almost radial direction in an installed state of the brake pad 3, a path 20 (Figs. 4, 5) of each of the wear particles intersects one of the slots 19.

**Fig. 4** shows a partial illustration of the brake pad 3 according to the first embodiment in a third viewing direction and paths 20 of brake wear particles. The paths 20 are sections of circles around the center which correspond to the rotational axis of the brake disc 4. On these paths 20, particles adhered to the brake disc 4 move when the brake disc 4 rotates. Each of the path 20 intersect with at least one of the channels 18, in this embodiment, formed by the slots 19. The paths 20 are only exemplary paths since the particles are generated by the entire contact surface of the brake lining 14 and the brake disc 4. Therefore, in a predefined area of the brake lining 14, a projection, onto the friction surface 17, of each point of a line through the center virtually rotated around the center intersects with at least one of the channels 18. The predefined area is an area of the brake lining 14 where the wear particles are to be removed. Inner and outer areas in the radial direction of the brake lining 14 in the assembled state are not included in this predefined area since, when providing a channel in these inner and outer areas, there is the risk that the brake linings 14 break out in these areas.

As shown in Fig. 4, the slots 19 do not intersect in order not to create separated regions which could break away at the outer region of the brake lining 14. In particular, in the embodiment shown in Fig. 4, the slots 19 are parallel.

Fig. 5 shows a partial illustration of the brake pad 3 according to a second embodiment and paths of wear particles.

The embodiment according to Fig. 5 distinguishes from the embodiment shown in Fig. 4 that the slots 19, formed by the channels 18, extending to the outer circumference of the brake lining 14, even though they also do not intersect, are not parallel. Nevertheless, all of the exemplary paths 20 of the wear particles also intersect these slots 19 formed by the channels 18.

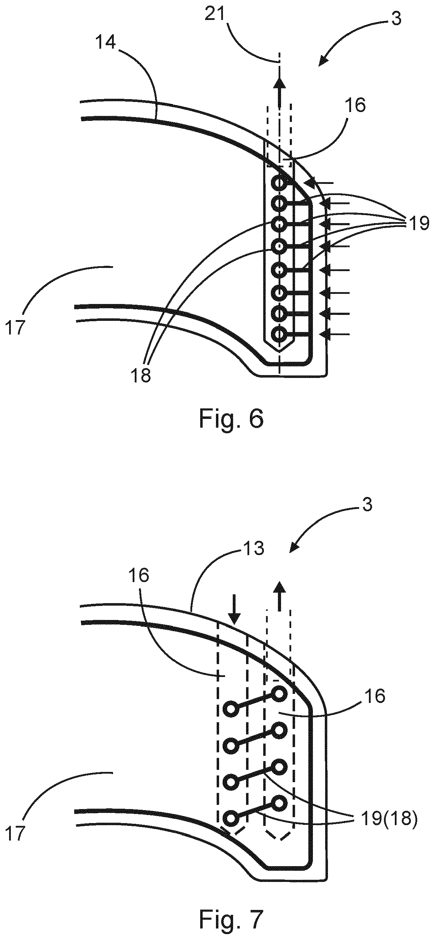

Fig. 6 shows a partial illustration of a brake pad 3 according to a third embodiment. As already shown in the preceding embodiments, the channels 18 are arranged such that the orifices of the channels 18 connecting the blind hole 16 and the friction surface 17 are aligned in one row. In an alternative embodiment, the orifices are formed by the channels 18 connecting several blind holes 16 and the friction surface 17 and the orifices of the channels 18 connected to one of the blind holes 16 are arranged in one row. Contrary to the first and second embodiment, the row is not aligned such that is directed to the rotational axis of the brake disc 4 but the disc brake 2 is configured such that the central axis 21 of the blind hole 16 of the brake pads 3 leads past a turning centre of the rotatable brake disc 4 such that a direction of the virtual displacement differs from a tangential direction of the brake disc. Nevertheless, the slots 19 also extend parallel to the outer circumference of the brake lining 14.

In an alternative embodiment, the channels 18 are arranged such that the orifices of at least two blind holes 16 are provided.

**Fig. 7** shows a partial illustration of a brake pad 3 according to a fourth embodiment.

The channels 18 of this embodiment distinguish from the channels 18 of the preceding embodiments in that the channels 18 do not extend to the outer circumference. In this embodiment, two blind holes 16 are provided in the back plate 13 so that the orifices in the friction surface 17 are aligned in two rows. The two blind holds 16 of this embodiment are connected by the slots 19 formed by the channels 18.

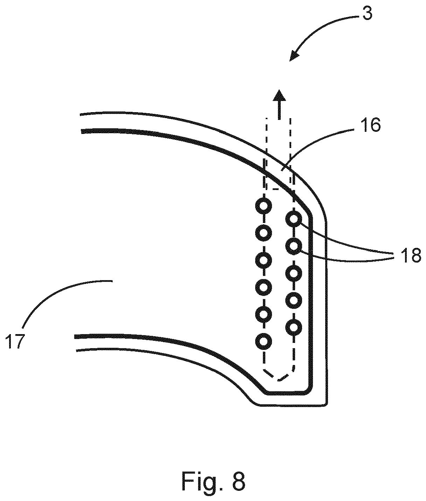

**Fig. 8** shows a partial illustration of a brake pad according to a fifth embodiment.

In this fifth embodiment, the orifices of the channels 18 are arranged in two rows, nevertheless, the channels 18 connect only one blind hole 16 and the friction surface 17.

The first ends 8'.1 (Fig. 1) of the tubes are connected to the blind holes 16 of the brake pads 3 and the disc brake 2 is configured such that an open end of the blind hole 16 is arranged at an end face of the back plate 13 directed away from the turning center of the rotatable brake disc 4. Alternatively, the open end of the blind hole 16 is provided at another location of the back plate 13.

In use, for performing braking, the brake pads 3 are moved in the direction towards the brake disc 4 by the actuator 7. When, after the braking request, the actuator 7 is deactivated, the brake pads 3 are automatically moved in the direction away from the brake disc 4 by the caliper releasing mechanism.

Simultaneously, when the disc brake 2 is connected to the collection device and the collection device operates, the brake wear particles are moved away from the brake pad via the channels 18 and the blind hole 16 of the brake pads 3.

Although the present invention has been described with reference to specific features and embodiments thereof, it is evident that various modifications and combinations can be made thereto without departing from the spirit and scope of the invention. The specification and drawings are, accordingly, to be regarded simply as an illustration of the invention as defined by the appended claims, and are contemplated to cover any and all modifications, variations combinations or equivalents that fall within the scope of the present invention.

### LIST OF REFERENCE SIGNS

- 1: brake system
- 2: disc brake
- 3: brake pad
- 4: brake disc
- 5: brake carrier
- 6: brake caliper
- 7: actuator
- 8, 8': spring elements
- 8'.1: first end of tube
- 8'.2: second end of tube
- 9: connecting part
- 10: pipe
- 11: hose
- 12: guiding wire
- 13: back plate
- 14: brake lining
- 15: attachment face
- 16: blind hole
- 17: friction surface
- 18: channel
- 19: slot
- 20: path of a ware particular
- 21: central axis

## Claims

1. A disc brake (2) provided with a rotatable brake disc (4) and a non-rotatable component comprising a brake caliper (6), wherein
the brake caliper (6) comprises a brake wear removal equipment configured to collect brake wear particles and to be connectable to a collection device,
the brake wear removal equipment comprises at least one tube, a first end of which is configured to collect brake wear particles and a second end of which is connectable to the collection device, and
the brake caliper (6) is configured to accommodate brake pads (3), and
the brake caliper (6) comprises
an actuator (7) configured to move the brake pads (3) in a direction toward the brake disc (4) for performing braking, and
at least one caliper releasing mechanism configured to move the brake pads (3) in a direction away from the brake disc (4) for releasing the braking, wherein
the at least one caliper releasing mechanism comprises a pair of longitudinal spring elements (8, 8'), a first end (8.1, 8'.1) of which is respectively joined to one of the brake pads (3) and second ends (8.2, 8'.2) of which are joined to one another and to the non-rotatable component such that the at least one caliper releasing mechanism is configured to be tensioned by a motion of the brake pads (3) in the direction toward the brake disc (4),
**characterized in that**
the longitudinal spring elements (8 ') are respectively formed by one of the at least one tube, and
the first ends (8'.1) of the tubes are respectively configured to collect brake wear particles and the second ends (8'.2) are connectable to the collection device.

2. The disc brake (2) of claim 1, wherein
the non-rotatable component comprises a brake carrier (5) carrying the brake caliper (6), and
the second ends (8'.2) of the tubes are joined to one another by means of a connecting part (9) attached to the brake carrier (5).

3. The disc brake (2) of claims 1 or 2, wherein
the second ends (8'.2) are connected to the collection device via a pipe (10) connected to the second ends (8'.2) of the tubes.

4. The disc brake (2) of claim 2 or 3, wherein
the second ends (8'.2) are connected to the collection device via a flexible hose (11).

5. The disc brake (2) of anyone of the preceding claims, wherein
the brake caliper (6) comprises two caliper releasing mechanisms having the tubes being the longitudinal spring elements (8).

6. A brake pad (3) for a disc brake (2), the brake pad (3) comprising
a back plate (13) and a brake lining (14), wherein
the brake lining (14) is attached to the back plate (13) on an attachment face (15) of the back plate (13),
the back plate (13) comprises at least one blind hole (16) along the attachment face (15), and
the brake lining (14) comprises several channels (18) connecting one blind hole (16) and a friction surface (17) of the brake lining (14),
**characterized in that**
at least some of the channels (18) extend to an outside circumference of the brake lining (14) such that the channels (18) respectively form a slot (19) in the brake lining (14).

7. The brake pad (3) of claim 6, wherein
the at least one blind hole (16) is formed in a circumferential region of the back plate (13).

8. The brake pad (3) of claim 7, wherein
several blind holes (16) are formed in opposite circumferential regions of the back plate (13).

9. The brake pad (3) of anyone of claims 6 to 8, wherein
the channels (18) are arranged such that orifices in the friction surface (17) formed by the channels (18) are aligned in at least one row.

10. The brake pad (3) of claim 9, wherein
the orifices are aligned in two rows, and
the channels (18) of one row are connected to one blind hole.

11. The brake pad (3) of anyone of claims 6 to 10, wherein
all of the channels (18) extend to the outside circumference of the brake lining (14).

12. The brake pad (3) of anyone of claims 6 to 11, wherein
the slots (19) do not intersect, in particular, the slots (19) are parallel.

13. The brake pad (3) of anyone of claims 10 to 12, wherein
the blind hole (16) has a central axis (21), and
the channels (18) extending to the outside circumference are arranged such that, in a view onto the friction surface (17), a projection of each point of the central axis (21) onto the friction surface (17) in a predefined area of the brake lining (14), which projection is virtually displaced perpendicularly with respect to the central axis (21) towards the outside circumference, intersects with at least one of the slots (19).

14. The brake pad (3) of anyone of claims 6 to 12 wherein
the brake lining (14) has a shape like a segment of an annulus around a centre, and
the channels (18) are arranged such that, in a view onto the friction surface (17), in a predefined area of the brake lining (14), a projection onto the friction surface (17) of each point of a line through the centre virtually rotated around the centre intersects with at least one of the channels (18).

15. A brake system (1) comprising a disc brake (2), connected to a collection device for wear particles, and brake pads (3),
**characterized in that**
the disc brake (2) is a disc brake (2) according to anyone of claims 1 to 5.

16. A brake system (1) comprising a disc brake (2) connected to a collection device for brake wear particles,
**characterized in that**
the brake system (1) comprises brake pads (3) according to anyone of claims 6 to 14.

17. The brake system (1) of claim 16, wherein the disc brake (2) comprises a disc brake (2) according to anyone of claims 1 to 5.

18. The brake system (1) of claim 17, wherein the first end (8'.1) of the tubes are connected to the blind hole (16).

19. The brake system (1) of anyone of claims 16 to 18, wherein
the disc brake (2) is configured such that an open end of the blind hole (16) is arranged at an end face of the back plate (13) directed away from a turning centre of the rotatable brake disc (2).

20. The brake system (1) of anyone of claims 16 to 18 comprising a brake pad (3) according to claim 13, wherein
the disc brake (2) is configured such that the central axis (21) of the blind hole (16) of the brake pads (3) leads beyond a turning centre of the rotatable brake disc (2) such that a direction of a virtual displacement of the projection of each point of the central axis (21) differs from a tangential direction of the brake disc.

## Patentansprüche

1. Scheibenbremse (2), die mit einer drehbaren Bremsscheibe (4) und einer nicht drehbaren Komponente versehen ist, die einen Bremssattel (6) umfasst, wobei
der Bremssattel (6) eine Ausrüstung zur Entfernung von Bremsverschleiß umfasst, die konfiguriert ist, um Bremsverschleißpartikel zu sammeln und mit einer Sammelvorrichtung verbindbar zu sein,
die Ausrüstung zur Entfernung von Bremsverschleiß mindestens ein Rohr umfasst, von dem ein erstes Ende zum Sammeln von Bremsverschleißpartikeln konfiguriert ist und von dem ein zweites Ende mit der Sammelvorrichtung verbindbar ist, und
der Bremssattel (6) zur Aufnahme von Bremsklötzen (3) konfiguriert ist, und
der Bremssattel (6) Folgendes umfasst
eine Betätigungsvorrichtung (7), die konfiguriert ist, um die Bremsklötze (3) in eine Richtung der Bremsscheibe (4) zu bewegen, um eine Bremsung durchzuführen, und
mindestens einen Sattellösemechanismus, der konfiguriert ist, um die Bremsklötze (3) in eine Richtung weg von der Bremsscheibe (4) zu bewegen, um die Bremsung zu lösen, wobei
der mindestens eine Sattellösemechanismus ein Paar von länglichen Federelementen (8, 8') umfasst, von denen ein erstes Ende (8.1, 8'.1) jeweils mit einem der Bremsklötze (3) verbunden ist und von denen zweite Enden (8.2, 8'.2) miteinander und mit der nicht drehbaren Komponente verbunden sind, so dass der mindestens eine Sattellösemechanismus konfiguriert ist, um durch eine Bewegung der Bremsklötze (3) in Richtung der Bremsscheibe (4) gespannt zu werden,
**dadurch gekennzeichnet, dass**
die länglichen Federelemente (8') jeweils von einem des mindestens einen Rohres gebildet sind, und
die ersten Enden (8'.1) der Rohre jeweils zum Sammeln von Bremsverschleißpartikeln konfiguriert sind und die zweiten Enden (8'.2) mit der Sammelvorrichtung verbindbar sind.

2. Scheibenbremse (2) nach Anspruch 1, wobei
die nicht drehbare Komponente einen Bremsträger (5) umfasst, der den Bremssattel (6) trägt, und
die zweiten Enden (8'.2) der Rohre mittels eines Verbindungsteils (9), der am Bremsträger (5) befestigt ist, miteinander verbunden sind.

3. Scheibenbremse (2) nach Anspruch 1 oder 2, wobei
die zweiten Enden' (8'.2) mit der Sammelvorrichtung über ein Rohr (10) verbunden sind, das mit den zweiten Enden (8'.2) der Rohre verbunden ist.

4. Scheibenbremse (2) nach Anspruch 2 oder 3, wobei
die zweiten Enden (8'.2) über einen flexiblen Schlauch (11) mit der Sammelvorrichtung verbunden sind.

5. Scheibenbremse (2) nach einem der vorstehenden Ansprüche, wobei
der Bremssattel (6) zwei Sattellösemechanismen umfasst, deren Rohre die länglichen Federelemente (8) sind.

6. Bremsklotz (3) für eine Scheibenbremse (2), wobei der Bremsklotz (3) Folgendes umfasst
eine Rückplatte (13) und einen Bremsbelag (14), wobei
der Bremsbelag (14) an der Rückplatte (13) an einer Befestigungsfläche (15) der Rückplatte (13) befestigt ist,
die Rückplatte (13) mindestens ein Blindloch (16) entlang der Befestigungsfläche (15) umfasst, und
der Bremsbelag (14) mehrere Kanäle (18) umfasst, die ein Blindloch (16) und eine Reiboberfläche (17) des Bremsbelags (14) verbinden,
**dadurch gekennzeichnet, dass**
mindestens ein Teil der Kanäle (18) sich bis zu einem Außenumfang des Bremsbelags (14) erstreckt, so dass die Kanäle (18) jeweils einen Schlitz (19) im Bremsbelag (14) bilden.

7. Bremsklotz (3) nach Anspruch 6, wobei
das mindestens eine Blindloch (16) in einem Umfangsbereich der Rückplatte (13) ausgebildet ist.

8. Bremsklotz (3) nach Anspruch 7, wobei
mehrere Blindlöcher (16) in gegenüberliegenden Umfangsbereichen der Rückplatte (13) ausgebildet sind.

9. Bremsklotz (3) nach einem der Ansprüche 6 bis 8, wobei
die Kanäle (18) so angeordnet sind, dass Öffnungen in der Reiboberfläche (17), die von den Kanälen (18) gebildet werden, in mindestens einer Reihe ausgerichtet sind.

10. Bremsklotz (3) nach Anspruch 9, wobei
die Öffnungen in zwei Reihen angeordnet sind und
die Kanäle (18) einer Reihe mit einem Blindloch verbunden sind.

11. Bremsklotz (3) nach einem der Ansprüche 6 bis 10, wobei
alle Kanäle (18) sich bis zum Außenumfang des Bremsbelags (14) erstrecken.

12. Bremsklotz (3) nach einem der Ansprüche 6 bis 11, wobei
sich die Schlitze (19) nicht überschneiden, insbesondere die Schlitze (19) parallel sind.

13. Bremsklotz (3) nach einem der Ansprüche 10 bis 12, wobei
das Blindloch (16) eine Mittelachse (21) aufweist und
die sich zum Außenumfang erstreckenden Kanäle (18) so angeordnet sind, dass sich, in einer Sicht auf die Reiboberfläche (17), eine Projektion jedes Punktes der Mittelachse (21) auf die Reiboberfläche (17) in einem vordefinierten Bereich des Bremsbelags (14), wobei die Projektion senkrecht in Bezug auf die Mittelachse (21) zum Außenumfang hin virtuell verschoben ist, mit mindestens einem der Schlitze (19) schneidet.

14. Bremsklotz (3) nach einem der Ansprüche 6 bis 12, wobei
der Bremsbelag (14) die Form eines Kreisringsegments um einen Mittelpunkt aufweist, und
die Kanäle (18) so angeordnet sind, dass sich, in einer Sicht auf die Reiboberfläche (17), in einem vordefinierten Bereich des Bremsbelags (14) eine Projektion auf die Reiboberfläche (17) jedes Punktes einer Linie durch den virtuell um den Mittelpunkt gedrehten Mittelpunkt mit mindestens einem der Kanäle (18) schneidet.

15. Bremssystem (1), umfassend eine Scheibenbremse (2), die mit einer Sammelvorrichtung für Verschleißpartikel verbunden ist, und Bremsklötze (3),
**dadurch gekennzeichnet, dass**
die Scheibenbremse (2) eine Scheibenbremse (2) nach einem der Ansprüche 1 bis 5 ist.

16. Bremssystem (1), umfassend eine Scheibenbremse (2), die mit einer Sammelvorrichtung für Bremsverschleißpartikel verbunden ist,
**dadurch gekennzeichnet, dass**
das Bremssystem (1) Bremsklötze (3) nach einem der Ansprüche 6 bis 14 umfasst.

17. Bremssystem (1) nach Anspruch 16, wobei die Scheibenbremse (2) eine Scheibenbremse (2) nach einem der Ansprüche 1 bis 5 umfasst.

18. Bremssystem (1) nach Anspruch 17, wobei das erste Ende (8'.1) der Rohre mit dem Blindloch (16) verbunden ist.

19. Bremssystem (1) nach einem der Ansprüche 16 bis 18, wobei
die Scheibenbremse (2) so konfiguriert ist, dass ein offenes Ende des Blindlochs (16) an einer von einem Drehmittelpunkt der drehbaren Bremsscheibe (2) abgewandten Endfläche der Rückplatte (13) angeordnet ist.

20. Bremssystem (1) nach einem der Ansprüche 16 bis 18, umfassend einen Bremsklotz (3) nach Anspruch 13, wobei
die Scheibenbremse (2) so konfiguriert ist, dass die Mittelachse (21) des Blindlochs (16) der Bremsklötze (3) über einen Drehmittelpunkt der drehbaren Bremsscheibe (2) hinaus führt, so dass sich eine Richtung einer virtuellen Verschiebung der Projektion eines jeden Punktes der Mittelachse (21) von einer tangentialen Richtung der Bremsscheibe unterscheidet.

## Revendications

1. Frein à disque (2) pourvu d'un disque de frein rotatif (4) et d'un composant non rotatif comprenant un étrier de frein (6), dans lequel
l'étrier de frein (6) comprend un équipement d'élimination d'usure de frein configuré pour collecter des particules d'usure de frein et pour pouvoir être raccordé à un dispositif de collecte,
l'équipement d'élimination d'usure de frein comprend au moins un tube dont une première extrémité est configurée pour collecter des particules d'usure de frein et dont une seconde extrémité peut être raccordée au dispositif de collecte, et
l'étrier de frein (6) est configuré pour recevoir des plaquettes de frein (3), et
l'étrier de frein (6) comprend
un actionneur (7) configuré pour déplacer les plaquettes de frein (3) dans une direction vers le disque de frein (4) pour effectuer un freinage, et
au moins un mécanisme de relâchement d'étrier configuré pour déplacer les plaquettes de frein (3) dans une direction à l'opposé du disque de frein (4) pour relâcher le freinage, dans lequel
le au moins un mécanisme de relâchement d'étrier comprend une paire d'éléments à ressort longitudinaux (8, 8'), dont une première extrémité (8.1, 8'.1) est respectivement reliée à l'une des plaquettes de frein (3), et dont les secondes extrémités (8.2, 8'.2) sont reliées les unes aux autres et au composant non rotatif de telle sorte que le au moins un mécanisme de relâchement d'étrier soit configuré pour être tendu par un mouvement des plaquettes de frein (3) dans la direction vers le disque de frein (4),
**caractérisé en ce que**
les éléments à ressort longitudinaux (8') sont respectivement formés par l'un du moins un tube, et
les premières extrémités (8'.1) des tubes sont respectivement configurées pour collecter des particules d'usure de frein et les secondes extrémités (8'.2) peuvent être raccordées au dispositif de collecte.

2. Frein à disque (2) selon la revendication 1, dans lequel
le composant non rotatif comprend un support de frein (5) supportant l'étrier de frein (6), et
les secondes extrémités (8'.2) des tubes sont reliées les unes aux autres au moyen d'une pièce de raccordement (9) fixée au support de frein (5).

3. Frein à disque (2) selon les revendications 1 ou 2, dans lequel
les secondes extrémités (8'.2) sont raccordées au dispositif de collecte par le biais d'un tuyau (10) raccordé aux secondes extrémités (8'.2) des tubes.

4. Frein à disque (2) selon la revendication 2 ou 3, dans lequel
les secondes extrémités (8'.2) sont raccordées au dispositif de collecte par le biais d'un tuyau souple (11).

5. Frein à disque (2) selon l'une quelconque des revendications précédentes, dans lequel
l'étrier de frein (6) comprend deux mécanismes de relâchement d'étrier dont les tubes sont les éléments à ressort longitudinaux (8).

6. Plaquette de frein (3) pour un frein à disque (2), la plaquette de frein (3) comprenant
une plaque arrière (13) et une garniture de frein (14), dans laquelle
la garniture de frein (14) est fixée à la plaque arrière (13) sur une face de fixation (15) de la plaque arrière (13),
la plaque arrière (13) comprend au moins un trou borgne (16) le long de la face de fixation (15), et
la garniture de frein (14) comprend plusieurs canaux (18) reliant un trou borgne (16) et une surface de friction (17) de la garniture de frein (14),
**caractérisée en ce que**
au moins certains des canaux (18) s'étendent jusqu'à une circonférence extérieure de la garniture de frein (14) de telle sorte que les canaux (18) forment respectivement une fente (19) dans la garniture de frein (14).

7. Plaquette de frein (3) selon la revendication 6, dans laquelle
le au moins un trou borgne (16) est formé dans une région circonférentielle de la plaque arrière (13).

8. Plaquette de frein (3) selon la revendication 7, dans laquelle
plusieurs trous borgnes (16) sont formés dans des régions circonférentielles opposées de la plaque arrière (13).

9. Plaquette de frein (3) selon l'une quelconque des revendications 6 à 8, dans laquelle :
les canaux (18) sont agencés de telle sorte que des orifices dans la surface de friction (17) formée par les canaux (18) soient alignés en au moins une rangée.

10. Plaquette de frein (3) selon la revendication 9, dans laquelle
les orifices sont alignés en deux rangées, et
les canaux (18) d'une rangée sont raccordés à un trou borgne.

11. Plaquette de frein (3) selon l'une quelconque des revendications 6 à 10, dans laquelle
tous les canaux (18) s'étendent jusqu'à la circonférence extérieure de la garniture de frein (14).

12. Plaquette de frein (3) selon l'une quelconque des revendications 6 à 11, dans laquelle
les fentes (19) ne se croisent pas, en particulier les fentes (19) sont parallèles.

13. Plaquette de frein (3) selon l'une quelconque des revendications 10 à 12, dans laquelle
le trou borgne (16) présente un axe central (21), et
les canaux (18) s'étendant jusqu'à la circonférence extérieure sont agencés de telle sorte que, dans une vue sur la surface de friction (17), une projection de chaque point de l'axe central (21) sur la surface de friction (17) dans une zone prédéfinie de la garniture de frein (14), laquelle projection est déplacée virtuellement perpendiculairement par rapport à l'axe central (21) vers la circonférence extérieure, croise au moins l'une des fentes (19).

14. Plaquette de frein (3) selon l'une quelconque des revendications 6 à 12, dans laquelle
la garniture de frein (14) présente une forme analogue à un segment d'un anneau autour d'un centre, et
les canaux (18) sont disposés de telle sorte que, dans une vue sur la surface de friction (17), dans une zone prédéfinie de la garniture de frein (14), une projection sur la surface de friction (17) de chaque point d'une ligne passant par le centre tournée virtuellement autour du centre croise au moins l'un des canaux (18).

15. Système de freinage (1) comprenant un frein à disque (2), raccordé à un dispositif de collecte de particules d'usure, et des plaquettes de frein (3),
**caractérisé en ce que**
le frein à disque (2) est un frein à disque (2) selon l'une quelconque des revendications 1 à 5.

16. Système de freinage (1) comprenant un frein à disque (2) raccordé à un dispositif de collecte de particules d'usure de frein,
**caractérisé en ce que**
le système de freinage (1) comprend des plaquettes de frein (3) selon l'une quelconque des revendications 6 à 14.

17. Système de freinage (1) selon la revendication 16, dans lequel le frein à disque (2) comprend un frein à disque (2) selon l'une quelconque des revendications 1 à 5.

18. Système de freinage (1) selon la revendication 17, dans lequel la première extrémité (8'.1) des tubes est raccordée au trou borgne (16).

19. Système de freinage (1) selon l'une quelconque des revendications 16 à 18, dans lequel
le frein à disque (2) est configuré de telle sorte qu'une extrémité ouverte du trou borgne (16) soit agencée au niveau d'une face d'extrémité de la plaque arrière (13) dirigée à l'opposé d'un centre de rotation du disque de frein rotatif (2).

20. Système de freinage (1) selon l'une quelconque des revendications 16 à 18, comprenant une plaquette de frein (3) selon la revendication 13, dans lequel
le frein à disque (2) est configuré de telle sorte que l'axe central (21) du trou borgne (16) des plaquettes de frein (3) mène au-delà d'un centre de rotation du disque de frein rotatif (2) de telle sorte qu'une direction d'un déplacement virtuel de la projection de chaque point de l'axe central (21) soit différente d'une direction tangentielle du disque de frein.
